(19) **Europäisches Patentamt**

**European Patent Office**

**Office européen des brevets**

(11) Numéro de publication : **0 076 185**
**B1**

(12) **FASCICULE DE BREVET EUROPÉEN**

(45) Date de publication du fascicule du brevet :
**19.12.84**

(51) Int. Cl.³ : **B 23 K 11/32**

(21) Numéro de dépôt : **82401667.9**

(22) Date de dépôt : **14.09.82**

(54) **Procédé et dispositif de soudage par points de tôles d'acier revêtu.**

(30) Priorité : **24.09.81 FR 8118007**
**19.10.81 FR 8119595**

(43) Date de publication de la demande :
**06.04.83 Bulletin 83/14**

(45) Mention de la délivrance du brevet :
**19.12.84 Bulletin 84/51**

(84) Etats contractants désignés :
**AT BE CH DE GB IT LI LU NL SE**

(56) Documents cités :
**DE-A- 1 565 438**
**US-A- 3 536 883**

(73) Titulaire : **STEELWELD - FRANCE S.à.r.l. dite :**
**"LE SULLY" 131, Boulevard Carnot**
**F-78110 Le Vesinet (FR)**

(72) Inventeur : **Humblot, Bernard**
**22 Chemin du Parc**
**F-78580 Bazemont (FR)**

(74) Mandataire : **Faber, Jean-Paul**
**CABINET FABER 34, rue de Leningrad**
**F-75008 Paris (FR)**

## Description

La présente invention concerne le soudage par résistance par points de tôles d'acier revêtu, c'est-à-dire de tôles électrozinguées ou galvanisées.

Dans l'industrie automobile, notamment pour former le soubassement des véhicules, on utilise des tôles d'acier revêtu qui constituent une protection contre la corrosion, les tôles sont assemblées par soudure par résistance par points, ce qui entraîne aux points de soudure l'enlèvement du revêtement, de sorte que cette protection contre la corrosion est peu efficace.

De plus, la soudure par points par résistance de telles tôles présente de nombreuses difficultés. En effet, au moment de la soudure une partie du revêtement adhère aux électrodes qui s'encrassent ainsi rapidement, on doit donc, obligatoirement, les nettoyer souvent, ce qui nécessite un arrêt de l'installation et par conséquent entraîne une augmentation du coût.

De plus, l'encrassement des électrodes augmente leur résistance et la consommation d'énergie croît.

Dans le brevet américain n° 3 536 883, on a proposé, dans une machine à souder par résistance destinée au soudage de tôles d'acier zinguées au feu d'insérer entre les électrodes et les tôles à souder une bande d'acier, cette bande se soudant aux tôles, l'insertion de cette bande étant combinée avec la projection aux points de soudure et durant le soudage d'eau sous pression et d'air comprimé de manière à expulser de l'emplacement de soudage les vapeurs de zinc engendrées par ladite soudure.

Une telle réalisation présente l'inconvénient que le long de la bande d'acier qui se trouve soudée aux tôles, on détruit le revêtement, de sorte que les tôles ainsi assemblées ne présentent à ces endroits aucune protection contre la corrosion.

De plus, une telle réalisation est complexe et chère, puisqu'elle nécessite, d'une part, la projection d'air comprimé, aux points de soudure et, d'autre part, l'utilisation d'eau sous pression envoyée aux points de soudure.

L'un des buts de l'invention est de réaliser un procédé simple, qui ne nécessite pas de modifications fondamentales des soudeuses et qui permet de remédier à ces divers inconvénients.

La présente invention se rapporte à un procédé de soudage par résistance par points de tôles d'acier revêtu dans lequel on applique sur les tôles à souder plusieurs électrodes de soudage reliées électriquement à un ou plusieurs enroulements secondaires d'un transformateur dont l'enroulement primaire est destiné à être relié à une source de courant alternatif et dans lequel on insère entre les électrodes et les tôles à souder une bande métallique et est caractérisé en ce qu'il consiste à utiliser comme bande métallique à insérer entre lesdites électrodes et lesdites tôles à souder un feuillard réalisé en un alliage de cuivre et d'un métal compatible avec le revêtement des tôles à souder.

Un tel procédé présente un très grand nombre d'avantages.

Tout d'abord lors de la soudure, on adjoint aux points de soudure une pellicule cuivrée alliée qui constitue une bonne protection contre la corrosion.

La durée d'utilisation des électrodes est prolongée celles-ci ne subissant pas d'encrassement et par conséquent la consommation d'énergie électrique reste égale.

Les points de soudure sont réguliers et visuellement on peut les vérifier.

De préférence, pour le soudage par résistance par points de tôles électrozinguées ou galvanisées, on utilisera un feuillard constitué d'un alliage de cuivre et de zinc. Le cuivre peut entrer dans une proportion de 60 % à 65 % dans la composition de l'alliage, le reste étant constitué de zinc.

L'invention vise également un dispositif pour la mise en œuvre du procédé ci-dessus, dispositif simple, peu onéreux et très facilement adaptable aux soudeuses de différents types.

Le dispositif selon l'invention est du type comportant des moyens pour supporter un rouleau d'une bande d'un feuillard d'un alliage de cuivre et d'un métal compatible avec le revêtement des tôles à souder, des moyens pour guider la bande de feuillard pour insérer celle-ci entre les tôles à souder et l'électrode correspondante et des moyens pour commander le déplacement de la bande après que chaque soudure ait été effectuée et est caractérisé en ce qu'il comprend un boîtier pourvu d'un axe pour recevoir un rouleau de la bande de feuillard, un second axe moteur destiné à supporter un galet de réception de la partie de la bande restant après la réalisation des points de soudure, ledit second axe moteur étant solidaire d'une roue à rochet avec laquelle coopère un cliquet porté par un levier mobile contre l'action d'un ressort de rappel et un vérin pneumatique à simple effet dont l'extrémité libre de la tige du piston est disposée de manière à pousser le levier contre l'action du ressort de rappel, lorsque le vérin est mis sous pression.

Grâce à cette disposition, on réalise un ensemble très simple qui s'adapte à tous les types de soudeuses par résistance par points et qui permet une grande cadence de soudage.

Afin qu'aucun point de soudure ne puisse être effectué sans que le feuillard ait été inséré entre l'électrode et la tôle, le dispositif comprend des moyens tâteurs pour vérifier la longueur du rouleau de la bande de feuillard, lesdits moyens tâteurs étant insérés sur un circuit de signalisation.

Afin que la longueur de la bande de feuillard déplacée après chaque point de soudure soit toujours régulière, le dispositif comprend des moyens pour modifier la valeur du déplacement angulaire de l'axe moteur en fonction de l'épaisseur de la partie de bande restant après la réalisation des points de soudure enroulée sur le galet de réception.

Suivant une caractéristique constructive préférée, les moyens tâteurs comprennent un doigt destiné à coopérer avec le rouleau de la bande de feuillard, ledit doigt étant porté par un ensemble coulissant diamétralement par rapport à l'axe dudit rouleau et relié à des moyens élastiques tendant à appliquer ledit doigt contre ledit rouleau, ledit ensemble comportant une butée mobile pour limiter la course de retour du levier en fonction de l'épaisseur du rouleau de la bande de feuillard.

Afin de faciliter l'utilisation du dispositif selon l'invention et de remplacer aisément la bande de feuillard, le rouleau de la bande de feuillard et le galet de réception de la partie de la bande de feuillard restant après la réalisation des points de soudure, sont logés dans une cassette, le boîtier étant pourvu de moyens élastiques pour la fixation de la cassette.

De préférence, le dispositif comporte des moyens manuels pour commander la rotation de la roue à rochet. Ainsi on peut, au moment du remplacement de la bande, vérifier le fonctionnement et tendre celle-ci.

Enfin, suivant une dernière caractéristique préférée, les moyens de guidage de la bande de feuillard sont constitués par des profilés en C en matière isolante fixés au boîtier par des pinces élastiques.

L'invention va maintenant être décrite avec plus de détails en se référant à un mode de réalisation particulier donné à titre d'exemple seulement et représenté aux dessins annexés.

Sur ces dessins :

Figure 1 image schématiquement le procédé selon l'invention,

Figure 1A est une vue en élévation schématique montrant un dispositif selon l'invention,

Figure 2 est une vue en perspective à plus grande échelle d'un dispositif selon l'invention,

Figure 3 est une vue en élévation à plus grande échelle du dispositif de la figure 1, le couvercle étant supposé enlevé et la cassette étant figurée en traits mixtes,

Figure 4 est une vue en coupe suivant la ligne IV-IV de la figure 3,

Figure 5 est une vue en coupe suivant la ligne V-V de la figure 3,

Figure 6 est une vue en coupe suivant la ligne VI-VI de la figure 1,

Figure 7 est une vue en perspective d'une cassette le couvercle étant supposé enlevé, et

Figure 8 est une vue en élévation similaire à la figure 3 le rouleau débiteur étant supposé vide.

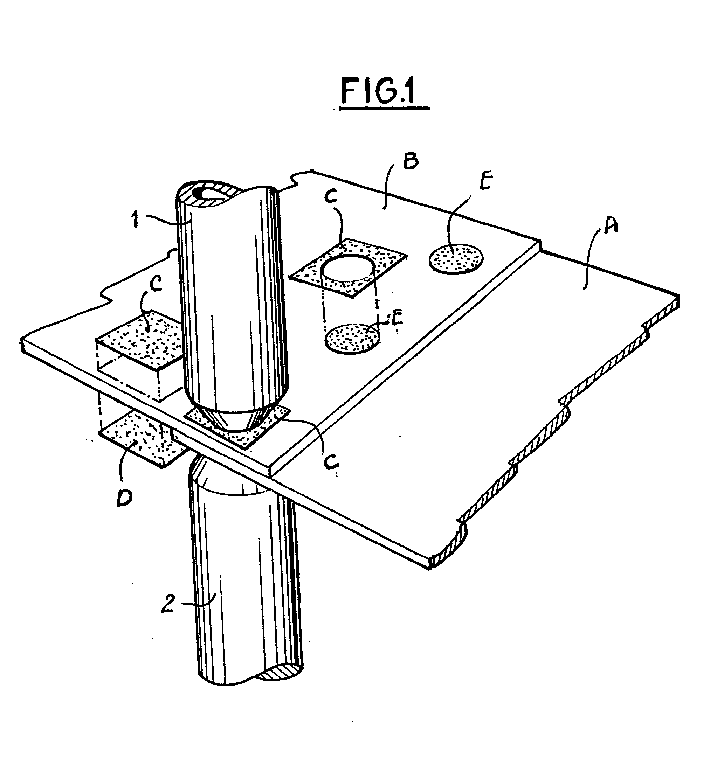

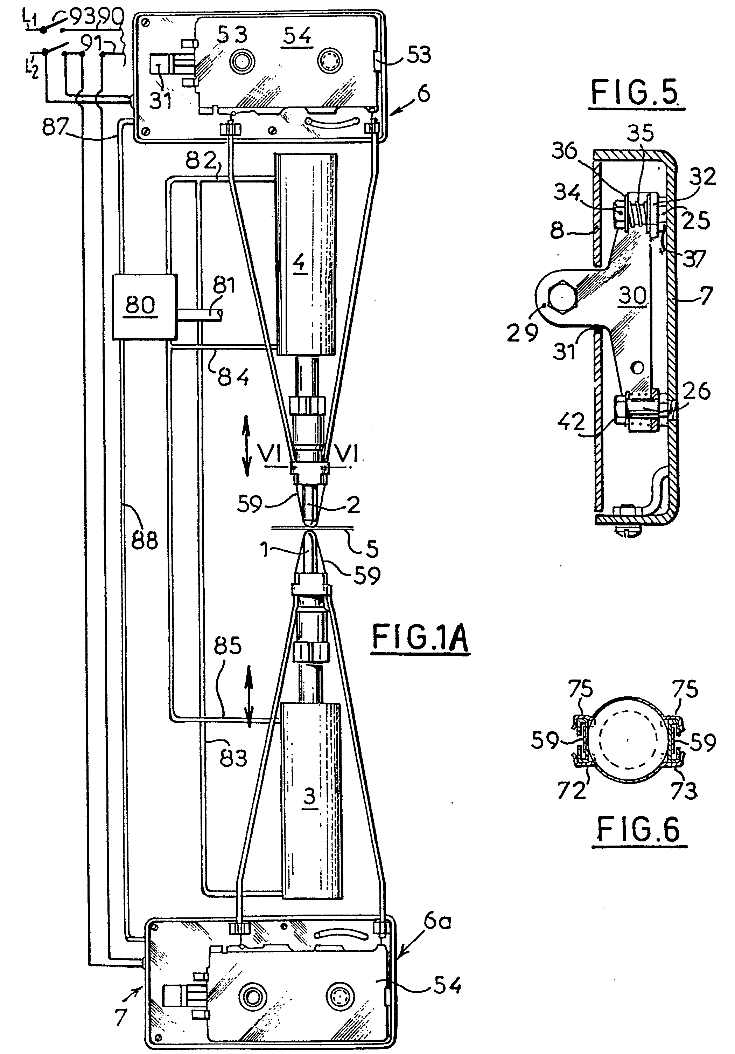

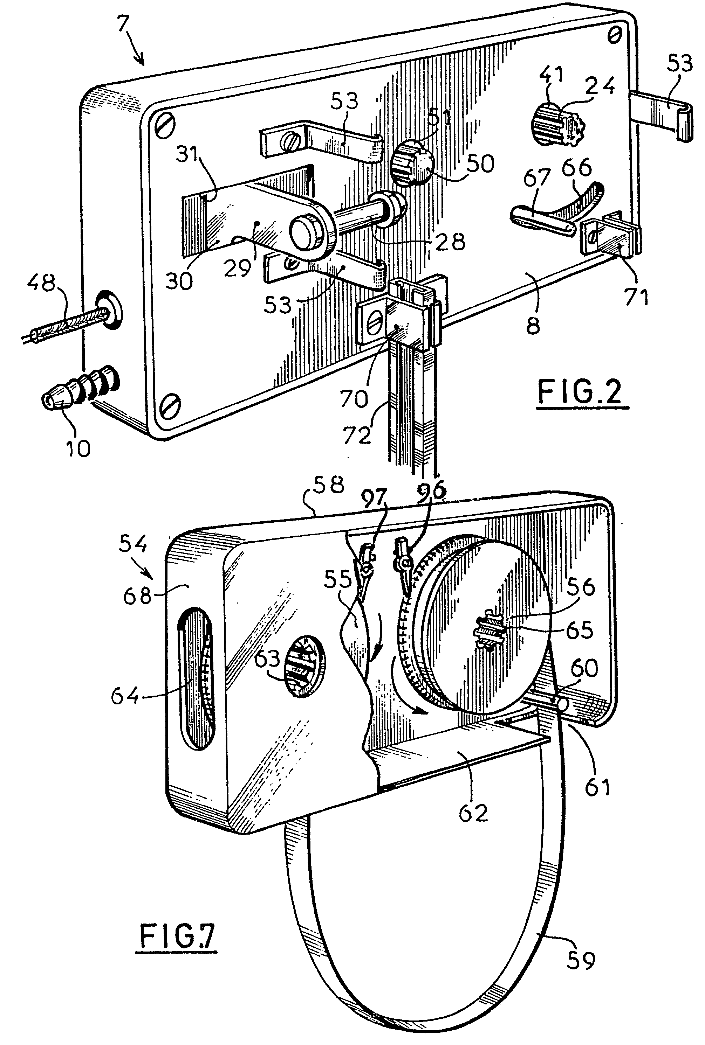

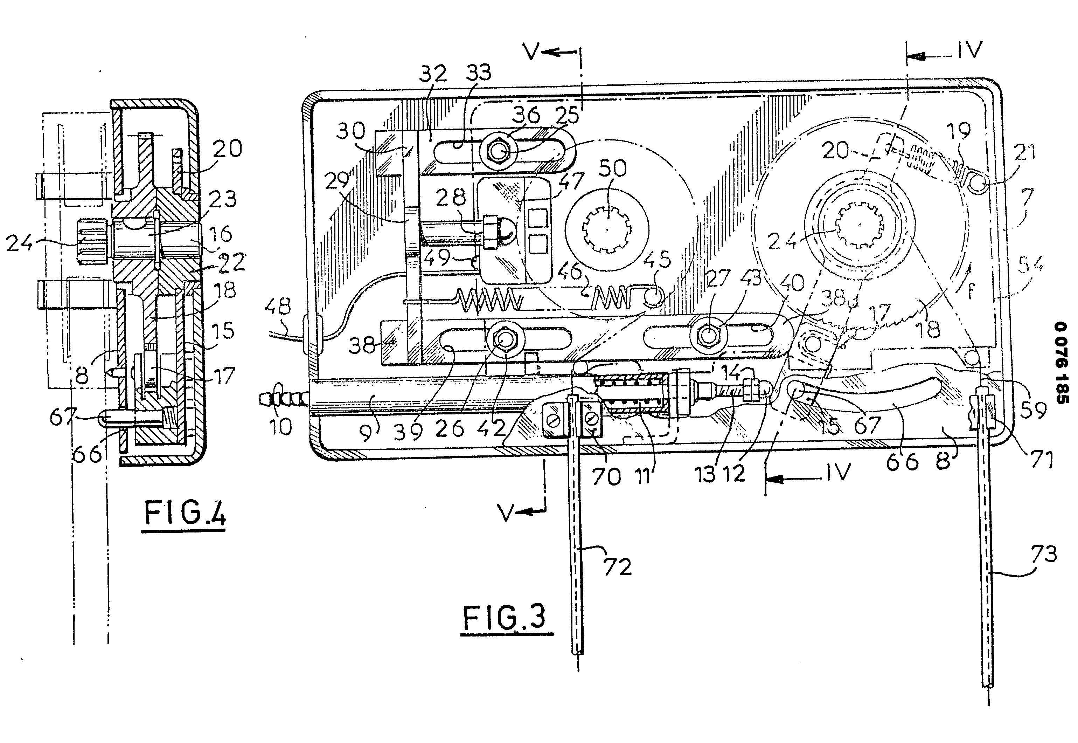

A la figure 1, on a représenté deux tôles d'acier A et B à basse teneur en carbone dont les deux faces sont revêtues par un passage dans un bain de galvanisation à chaud.

Le revêtement de zinc peut être de l'ordre de 20 microns. Ces tôles doivent être assemblées l'une à l'autre comme représenté schématiquement à la figure 1.

Dans le mode opératoire représenté, on a utilisé une unité de soudage du type comprenant deux électrodes 1 et 2 se faisant vis-à-vis. Les électrodes peuvent être écartées pour la mise en place des tôles et rapprochées pour serrer lesdites tôles et réaliser un point de soudure.

L'invention s'applique à tous les types de soudeuses par résistance par points par exemple aux soudeuses appelées double point série.

Dans ces soudeuses par résistance, il est prévu un transformateur avec un circuit magnétique, un enroulement primaire relié à une source de courant électrique alternatif et un enroulement secondaire relié aux électrodes. De tels soudeuses sont connues et elles ne seront pas décrites ici en détail.

Conformément au procédé selon l'invention, entre l'électrode 1 et la tôle A, on insère au moment où l'électrode est écartée un feuillard C, un feuillard D étant également inséré entre l'électrode 2 et la tôle B.

Lorsque les électrodes 1 et 2 sont rapprochées et que les tôles A et B sont ainsi serrées, on réalise le point de soudure E.

Au moment où le point de soudure est formé, une pastille est découpée dans le feuillard et au point de soudure, cette pastille forme une pellicule cuivrée alliée qui constitue une bonne protection contre la corrosion.

Les feuillards C et D sont formés d'un alliage de cuivre et de zinc, le cuivre pouvant entrer dans une proportion de 63,5 à 65 %, tandis que le reste de l'alliage peut être constitué de zinc.

Aux figures 1A à 8 on a représenté un dispositif pour la mise en œuvre du procédé qui vient d'être décrit ci-dessus.

Le dispositif est destiné à équiper une soudeuse par résistance par points du type schématisé à la figure 1A et comprenant deux électrodes mobiles 1 et 2 reliées à un ou plusieurs enroulements secondaires d'un transformateur dont l'enroulement primaire est destiné à être relié à une source de courant alternatif.

Dans ce mode de réalisation, on va supposer que les deux électrodes 1 et 2 sont reliées à des vérins respectivement 3 et 4 pour commander leur rapprochement en vue de serrer des tôles d'acier revêtu 5, pour réaliser des points de soudure et leur écartement pour permettre de retirer les tôles 5 et les remplacer par d'autres à souder.

Pour chaque électrode 1 et 2, il est prévu un dispositif selon l'invention, ceux-ci étant référencés en 6 et 6a. Les dispositifs 6 et 6a sont identiques et seul le dispositif 6 sera décrit ici en détail.

Le dispositif 6 comprend un boîtier 7 fermé par un couvercle 8 et dans lequel est logé un cylindre 9 d'un vérin pneumatique comportant un embout 10 pour le relier à une source d'air comprimé. Dans le cylindre 9 est mobile un piston contre l'action d'un ressort de rappel 11, la tige du piston étant terminée par un filetage 13 destiné à recevoir un écrou borgne 12 avec un contre-écrou 14, ledit écrou borgne constituant une tête de poussée pour le levier 15. Ce levier 15 est solidaire d'un anneau 22 guidé dans un palier du fond du boîtier 7 et traversé par un axe fou 16. Le levier 15 comporte un cliquet 17 coopérant avec la denture 18 d'une roue à rochet, ledit levier 15 étant prolongé par une patte 20 sur laquelle s'accroche l'une des extrémités d'un ressort de traction 19, dont l'autre extrémité est fixée à un téton 21 prévu sur le fond dudit boîtier 7.

Sur l'axe 16 est calée une douille 23 solidaire d'un pignon 24 qui fait saillie à la surface du couvercle 8 à travers une ouverture 42, la roue à rochet 18 étant calée sur la douille 23.

Une barrette 30 comporte dans sa partie centrale un bossage 29 qui traverse une ouverture 31 du couvercle 8 et qui supporte un organe tâteur 28.

La barrette 30 est solidaire d'une plaquette 32 percée d'une ouverture allongée 33 à travers laquelle s'étend un téton 25 solidaire du fond du boîtier 7 et recevant sur son extrémité libre filetée, un écrou 33, un ressort 35 étant inséré entre des rondelles 36 pour maintenir la plaquette 32 appliquée contre un épaulement 37 du téton.

A son extrémité opposée à celle solidaire de la plaquette 32, la barrette 30 est solidaire d'une seconde plaquette 38 présentant deux ouvertures allongées 39 et 40 guidées respectivement sur des tétons 26 et 27. Ces tétons sont filetés à leur extrémité libre pour recevoir des écrous 42 et 43 respectivement avec interposition des rondelles et de ressorts pour obtenir un montage identique au montage de la plaquette 32 afin que l'ensemble puisse coulisser librement sur une longueur correspondant à la longueur des ouvertures 33, 39 et 40.

Sur le fond du boîtier 7, il est prévu un téton 45 sur lequel est fixée l'une des extrémités d'un ressort de traction 46 dont l'autre extrémité est fixée à la barrette 30.

Un interrupteur 47 est prévu dans le boîtier 7 et est relié par un câble conducteur souple 48 à l'installation électrique de commande de la soudeuse de manière à ouvrir le circuit général lorsque son contact 49 est sollicité par la barrette 30 (voir fig. 1).

Dans le fond du boîtier 7 est tourillonné un axe 50 qui fait saillie à travers une ouverture 51 du couvercle 8 et qui comporte à son extrémité libre une denture identique à la denture 24.

Sur le couvercle 8, il est prévu des pattes élastiques 53 pour la fixation d'une cassette 54 comprenant, logés dans un boîtier 58, un galet débiteur 55, un galet récepteur 56 pour une bande 59 d'un alliage de cuivre et d'un matériau compatible avec le revêtement des tôles 5 à souder.

Le boîtier 58 comporte des tétons de guidage 60 de la bande 59, celle-ci traversant des ouvertures 61 de l'une des parois latérales 62. Dans une paroi 68 du boîtier 58 est pratiquée une ouverture 64 pour le passage de l'organe tâteur 28.

Le galet 55 présente un trou circulaire central cannelé 63 de manière que lorsque la cassette 54 est mise en place, l'axe 50 s'engage pour coopérer avec les cannelures du trou 63 et que ledit galet 55 puisse tourner librement.

Le galet récepteur 56 comporte un trou central 65 identique au trou 63 et pourvu de rainures de manière que le pignon 24 lorsque la cassette est mise en place, soit solidarisé avec ledit galet 56.

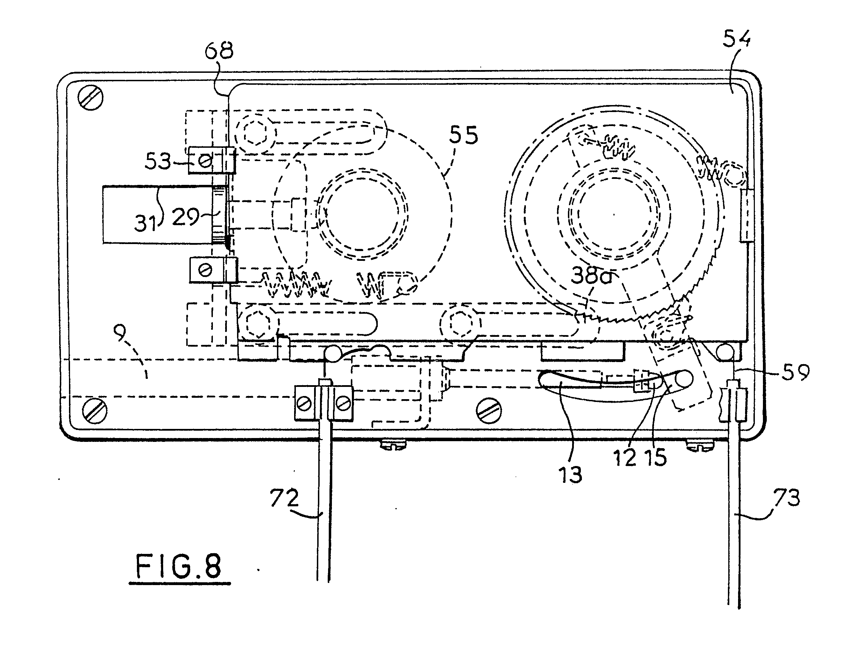

Sur le fond du boîtier 58 sont montés des cliquets de retenue 96 et 97 qui coopèrent avec une denture d'un flanc des galets 55 et 56 de manière que ceux-ci ne puissent tourner que dans le sens indiqué par les flèches (voir fig. 7).

Dans le couvercle 8 est pratiquée une ouverture arquée 66 à travers laquelle fait saillie un téton 67 solidaire du levier 15 de manière qu'on puisse manuellement commander la rotation de la roue 18 et par conséquent celle du galet 56.

Sur le couvercle 8 sont prévues deux paires de pattes élastiques 70 et 71 destinées à maintenir élastiquement respectivement des profilés en C 72 et 73 en matière plastique isolante par exemple, ces profilés servant au guidage de la bande 59 et étant fixés au voisinage de l'électrode 2 par des pinces élastiques 75 (voir fig. 6).

A la figure 1A on a représenté schématiquement le circuit pneumatique de la soudeuse, ce circuit comprenant un distributeur 80 relié par un conduit 81 à une source d'air comprimé. Le vérin 4 est un vérin à double effet et l'admission d'air comprimé du côté de la face du piston pourvue de la tige s'effectue par un conduit 84 inséré entre le vérin et le distributeur 80. Sur le conduit 84 est branchée une dérivation 85 reliée au vérin 3 pour l'admission d'air comprimé dans ce dernier, du côté de la face du piston solidaire de la tige.

Un conduit 82 relie le piston 4 au distributeur pour l'admission d'air comprimé dans le cylindre du côté de la face libre du piston et sur ce conduit est montée une dérivation 83 débouchant dans le cylindre du vérin 3. Comme cela est habituel lorsque l'une des extrémités des cylindres des vérins est à l'admission, l'autre extrémité est à l'échappement.

Sur le distributeur 80 il est prévu un tiroir pour commander par des conduits 87 et 88 l'admission d'air comprimé dans les cylindres des vérins 9 des dispositifs 6 et 6a de manière à commander le déplacement de la tige 13 des pistons pour pousser les leviers 15 correspondants. Lorsque les pistons sont à fin de course, le tiroir est déplacé et commande la mise à l'air libre des vérins 9, de sorte que par l'action des ressorts 11, les tiges des pistons reviennent à leur position initiale.

Schématiquement à la figure 1A on a représenté le circuit électrique de commande de la soudeuse qui comprend deux conducteurs 90 et 91 reliés à une tige L1 et L2 avec interposition d'un interrupteur général 93. Sur le conducteur 91 sont insérés les interrupteurs 47 des dispositifs 6 et 6a.

Le fonctionnement est le suivant :

Sur chaque boîtier 7 des dispositifs 6 et 6a, on met en place une cassette 54, les cassettes étant maintenues par les pattes élastiques 53 et l'axe 50, et le pignon 24 étant engagés respectivement dans les trous 63 et 65 des galets 55 et 56.

La bande 59 est fixée par son extrémité correspondante au galet 56 et elle est déroulée pour être engagée dans les guides 72 et 73 et passer devant l'électrode correspondante.

En agissant sur le téton 67, on commande le déplacement de la roue 18 de manière à tendre la bande 59.

On remarquera que pour mettre en place la cassette 54, on doit déplacer la barrette 30 contre l'action du ressort 46, en agissant sur le bossage 29 et ainsi écarter ladite barrette du contact 49 de l'interrupteur 47, de sorte que le circuit électrique général de la machine à souder est fermé.

L'organe tâteur 28 traverse l'ouverture 64 de la cassette 54 et bute contre le rouleau de la bande 59.

Lorsqu'on commande le soudage, les conduits 82 et 83 sont à l'admission, tandis que les conduits 84 et 85 sont à l'air libre. Les électrodes 1 et 2 sont rapprochées pour serrer les tôles 5 et la partie des bandes 59 insérée entre lesdites électrodes et les tôles.

Après que le point de soudure ait été effectué, on commande l'écartement des électrodes 1 et 2, les conduits 84 et 85 étant à l'admission tandis que les conduits 82 et 83 sont à l'échappement.

Lorsque les électrodes 1 et 2 sont écartées par les conduits 87 et 88 de l'air comprimé est envoyé dans les vérins 9 des dispositifs 6 et 6a. Le piston du vérin 9 se déplace contre l'action du ressort 11 et la tête de poussée 12 en portant contre le levier 15 fait pivoter celui-ci dans le sens de la flèche « f » contre l'action du ressort 19.

Le cliquet 17 en coopérant avec la denture de la roue à rochet 18 entraîne celle-ci de sorte qu'une certaine longueur de bande 59 s'enroule sur le galet 56.

Les conduits 87 et 88 sont ensuite mis à l'air libre par le distributeur 80 et, sous l'action des ressorts 11, les vérins 9 reviennent dans leur position initiale.

Le même processus se reproduit à chaque soudure et ainsi au point de soudure est déposée une pellicule cuivrée alliée elle-même protectrice, et on évite qu'une partie du revêtement des tôles adhère aux électrodes.

On remarquera que la tige 13 du piston du vérin 9 à chaque cycle se déplace d'une même longueur et que l'épaisseur du rouleau débiteur de la bande 59 décroît, tandis que l'épaisseur du rouleau récepteur (galet 56) croît de sorte que pour un déplacement angulaire constant du levier 15, la longueur de bande 59 enroulée sur le galet 56 lorsque l'épaisseur du rouleau débiteur est important serait faible tandis qu'au contraire, lorsque le diamètre du rouleau récepteur est grand, la longueur de bande 59 enroulée sur ledit galet 56 serait beaucoup plus importante. Afin d'éviter cet inconvénient, et d'obtenir après chaque point de soudure un déplacement d'une longueur constante de la bande 59 indépendamment des diamètres respectifs des rouleaux débiteur et récepteur, le dispositif prévoit de réduire le déplacement angulaire du levier 15 au fur et à mesure de l'augmentation du diamètre du rouleau récepteur.

L'extrémité libre de la plaquette 38 est disposée de manière à constituer une butée 38a contre laquelle peut venir porter le levier 15.

A la figure 3, on a supposé que le rouleau débiteur est plein tandis que le rouleau récepteur est pratiquement vide. A chaque déplacement de la tige 13 du piston du vérin 9, le levier 15 pivotera dans le sens actif (sens de la flèche f) d'un angle correspondant à la course du piston.

Au fur et à mesure que le diamètre de la bande 59 s'enroulant sur le galet 56 croît, le diamètre du rouleau débiteur décroît et ainsi l'organe tâteur 28 se déplace sous l'action du ressort 46, les plaquettes 32 et 38 grâce à leurs lumières allongées 33, 39 et 40 se déplaçant en direction du côté du boîtier 7 adjacent à l'axe 16. Ainsi, la butée 38a vient se situer sur le trajet de retour du levier 15.

Au fur et à mesure que le diamètre du rouleau récepteur grossit, la butée 38a s'avançant, la course active du levier 15 diminue. Comme on le voit, à la figure 8, comme la butée 38a s'oppose à un retour à la position initiale du levier 15 sous l'action de son ressort 19, lorsque le vérin 9 est sous pression, une partie de la course de la tête de poussée 12 s'effectue sans toucher le levier 15.

Une telle disposition est simple, sûre et peu compliquée et assure une grande régularité du pas de déplacement de la bande de feuillard 59.

Lorsque la bande 59 a complètement été débitée et que, par conséquent, le galet 55 est vide, la barrette 30 touche le contact 49, qui ouvre le circuit de commande de l'ensemble de sorte que la machine s'arrête.

Il pourrait être prévu un circuit destiné à indiquer que le rouleau débiteur est vide, ou est presque vide, circuit commandé par l'interrupteur 47 et commandant un signal sonore ou visuel.

Dans le mode de réalisation représenté, on a supposé que les électrodes 1 et 2 étaient toutes les deux mobiles verticalement, le dispositif selon l'invention pourrait s'adapter également à des soudeuses dont une seule électrode serait mobile. Dans ce cas, le déplacement de la bande de feuillard 59 s'effectuerait après l'enlèvement des tôles lorsque le point de soudure a été réalisé.

**Revendications**

1. Procédé de soudage par résistance par points de tôles d'acier revêtu dans lequel on applique sur les tôles à souder plusieurs électrodes (1, 2) de soudage reliées électriquement à un ou plusieurs enroulements secondaires d'un transformateur dont l'enroulement primaire est destiné à être relié à une source de courant alternatif et dans lequel on insère entre les électrodes (1, 2) et les tôles à souder une bande métallique caractérisé en ce qu'il consiste à utiliser comme bande métallique à insérer entre lesdites électrodes et lesdites tôles à souder un feuillard (C, D) réalisé en un alliage de cuivre et d'un métal compatible avec le revêtement des tôles à souder.

2. Procédé de soudage par résistance par points de tôles d'acier revêtu selon la revendication 1, caractérisé en ce qu'on utilise un feuillard formé d'un alliage de cuivre et de zinc.

3. Procédé de soudage par résistance par points de tôles d'acier revêtu selon la revendication 2, caractérisé en ce qu'on utilise un feuillard dont l'alliage comprend entre 60 et 65 % de cuivre et 40 à 35 % de zinc.

4. Dispositif pour la mise en œuvre du procédé selon la revendication 1, ledit dispositif étant adaptable à une machine à souder par résistance par points de tôles d'acier revêtu, ladite machine à souder comprenant plusieurs électrodes (1, 2) de soudage reliées électriquement à un ou plusieurs enroulements secondaires d'un transformateur dont l'enroulement primaire est destiné à être relié à une source de courant alternatif et ledit dispositif comportant des moyens (50) pour supporter un rouleau (55) d'une bande d'un feuillard (59) d'un alliage de cuivre et d'un métal compatible avec le revêtement des tôles à souder (5), des moyens (60, 72) pour guider la bande (59) de feuillard pour insérer celle-ci entre les tôles à souder (5) et l'électrode (2) correspondante et des moyens pour commander le déplacement de la bande (59) après que chaque soudure ait été effectuée, caractérisé en ce qu'il comprend un boîtier (7) pourvu d'un axe (50) pour recevoir un rouleau de la bande de feuillard (59), un second axe moteur (24) destiné à supporter un galet (56) de réception de la partie de la bande restant après la réalisation des points de soudure, ledit second axe moteur (24) étant solidaire d'une roue à rochet (18) avec laquelle coopère un cliquet (17) porté par un levier (15) mobile contre l'action d'un ressort de rappel (19) et un vérin pneumatique à simple effet (9) dont l'extrémité libre (12) de la tige (13) du piston est disposée de manière à pousser le levier (15) contre l'action du ressort de rappel (19) lorsque le vérin (9) est mis sous pression.

5. Dispositif selon la revendication 4, caractérisé en ce qu'il comprend des moyens tâteurs (28) pour vérifier la longueur du rouleau (55) de la bande de feuillard (59), lesdits moyens tâteurs (28) étant insérés sur un circuit de signalisation.

6. Dispositif selon la revendication 4, caractérisé en ce qu'il comprend des moyens (28, 38) pour modifier la valeur du déplacement angulaire de l'axe moteur (24) en fonction de l'épaisseur de la partie de bande restant après la réalisation des points de soudure enroulée sur le galet de réception (56).

7. Dispositif selon les revendications 4, 5 et 6, caractérisé en ce que les moyens tâteurs (28) comprennent un doigt destiné à coopérer avec le rouleau de la bande de feuillard (59) ledit doigt étant porté par un ensemble coulissant diamétralement par rapport à l'axe dudit rouleau (55) et relié à des moyens élastiques (46) tendant à appliquer ledit doigt (28) contre ledit rouleau (55), ledit ensemble comportant une butée (38a) mobile pour limiter la course de retour du levier (15) en fonction de l'épaisseur du rouleau (55) de la bande de feuillard (59).

8. Dispositif selon la revendication 4, caractérisé en ce que le rouleau (55) de la bande de feuillard (59) et le galet de réception (56) de la partie de la bande de feuillard restant après la réalisation des points de soudure sont logés dans une cassette (54) le boîtier (7) étant pourvu de moyens élastiques (53) pour la fixation de la cassette (54).

9. Dispositif selon la revendication 4, caractérisé en ce qu'il comporte des moyens manuels (67) pour commander la rotation de la roue à rochet (18).

10. Dispositif selon la revendication 4, caractérisé en ce que les moyens de guidage de la bande de feuillard sont constitués par des profilés en C (72, 73) en matière isolante fixés au boîtier par des pinces élastiques (7).

## Claims

1. Process for the spot resistance welding of coated steel sheets, in which the sheets to be welded have applied thereto a plurality of welding electrodes (1, 2) which are electrically connected to one or more secondary windings of a transformer, of which the primary winding is adapted to be connected to an alternating current source and in which a metallic strip is inserted between the electrodes (1, 2) and the sheets to be welded, characterised in that it consists in using, as metallic strip to be inserted between the said electrodes and the said sheets to be welded, a metallic ribbon (C, D) which is made of an alloy of copper and a metal compatible with the coating of the sheets to be welded.

2. Process for the spot resistance welding of coated steel sheets according to claim 1, characterised in that a metallic ribbon formed of an alloy of copper and zinc is used.

3. Process for the spot resistance welding of coated steel sheets according to claim 2, characterised by the use of a metallic ribbon of which the alloy comprises between 60 and 65 % of copper and 40 to 35 % of zinc.

4. Apparatus for carrying into effect the process according to claim 1, said apparatus being adaptable to a spot resistance welding machine for coated steel sheets, the said welding machine comprising a plurality of welding electrodes (1, 2) connected electrically to one or more secondary windings of a transformer, of which the primary winding is adapted to be connected to an alternating current source and the said apparatus comprising means (50) for supporting a coil (55) of a metallic ribbon (59) of an alloy of copper and a metal compatible with the coating of the sheets (5) to be welded, means (60, 72) for guiding the metallic ribbon (59) for inserting the latter between the sheets (5) which are to be welded and the corresponding electrode (2) and means for controlling the displacement of the ribbon (59) after each weld has been effected, characterised in that it comprises a housing (7) provided with a spindle (50) for receiving a coil of the metallic ribbon (59), a second driving spindle (24) adapted to support a roller (56) for receiving that part of the ribbon which remains after the welding spots have been formed, the said second driving spindle (24) being fast with a ratchet wheel (18) with which cooperates a pawl (17) carried by a lever (15) movable against the action of a return spring (19) and a single-acting pneumatic jack (9), of which the free end (12) of the piston rod (13) is so disposed as to push the lever (15) against the action of the return spring (19) when the jack (9) is pressurised.

5. Apparatus according to claim 4, characterised in that it comprises sensing means (28) for checking the length of the coil (55) of the ribbon strip (59), the said sensing means (28) being included in a signalling circuit.

6. Apparatus according to claim 4, characterised in that it comprises means (28, 38) for modifying the value of the angular displacement of the driving spindle or shaft (24) as a function of the thickness of the part of the ribbon remaining coiled on the take-up roller (56) after the formation of the welding spots.

7. Apparatus according to claims 4, 5 and 6, characterised in that the sensing means (28) comprise a finger adapted to cooperate with the coil of the metallic ribbon (59), the said finger being carried by an assembly sliding diametrically with respect to the shaft of the said coil (55) and connected to resilient means (46) tending to apply the said finger (28) to the said coil (55), the said assembly comprising a movable stop (38a) for limiting the return travel of the lever (15) as a function of the thickness of the coil (55) of the metallic ribbon (59).

8. Apparatus according to claim 4, characterised in that the coil (55) of the metallic ribbon (59) and the take-up roller (56) of the part of the said ribbon remaining after the formation of the welding spots are mounted in a cassette (54), the housing (7) being provided with resilient means (53) for the fixing of the cassette (54).

9. Apparatus according to claim 4, characterised in that it comprises manual means (67) for controlling the rotation of the ratchet wheel (18).

10. Apparatus according to claim 4, characterised in that the means for guiding the metallic ribbon are formed by C-section members (72, 73) of insulating material, fixed to the housing by means of spring clips (7).

**Ansprüche**

1. Verfahren zum Widerstandspunktschweißen von überzogenen Stahlblechen, bei welchem an die zu verschweißenden Bleche mehrere Schweißelektroden (1, 2) angesetzt werden, welche elektrisch an eine oder mehrere Sekundärwicklungen eines Transformators angeschlossen werden, dessen Primärwicklung mit einer Wechselstromquelle verbunden ist, und bei welchem zwischen die Elektroden (1, 2) und die zu verschweißenden Bleche ein Metallband eingelegt wird und welches dadurch gekennzeichnet ist, daß als zwischen die genannten Elektroden und die genannten zu verschweißenden Bleche einzulegendes Metallband ein Band (C, D) Verwendung findet, welches aus einer Legierung von Kupfer und einem mit dem Überzug der zu verschweißenden Bleche verträglichen Metall hergestellt wurde.

2. Verfahren gemäß Anspruch 1, dadurch gekennzeichnet, daß ein aus einer Kupfer/Zink-Legierung hergestelltes Band verwendet wird.

3. Verfahren gemäß Anspruch 2, dadurch gekennzeichnet, daß ein Band zur Verwendung gelangt, dessen Legierung zu 60-65 % aus Kupfer und zu 40-35 % aus Zink besteht.

4. Vorrichtung zur Durchführung des Verfahrens gemäß Anspruch 1, wobei die genannte Vorrichtung auf eine Maschine zum Widerstandspunktschweißen von überzogenen Stahlblechen adaptiert werden kann und wobei die genannte Schweißmaschine mehrere Elektroden (1, 2) umfaßt, die elektrisch an eine oder mehrere Sekundärwicklungen eines Transformators angeschlossen sind, dessen Primärwicklung mit einer Wechselstromquelle verbunden ist und wobei die genannte Vorrichtung mit Vorrichtungen (50) zum Tragen einer Rolle (55) eines aus einer Legierung von Kupfer und einem mit dem Überzug der zu verschweißenden Bleche (5) verträglichen Metall bestehenden Bandes ausgerüstet ist, mit Vorrichtungen (60, 72) zur Führung dieses Bandes (59), um dieses zwischen die zu verschweißenden Bleche (5) und die entsprechende Elektrode (2) einzubringen, mit Vorrichtungen zur Steuerung der Lageveränderung des Bandes (59) nach jeder Schweißung, dadurch gekennzeichnet, daß sie ein Gehäuse (7) mit einer Achse (50) zur Aufnahme einer Metallbandrolle (59) umfaßt, eine zweite Antriebsachse (24) für eine Rolle zur Aufnahme des nach Ausführung der Schweißpunkte verbleibenden Stückes Metallband, wobei die genannte zweite Achse (24) mit einem Sperr-Rad (18) fest verbunden ist, welches mit einer Sperrklinke (17) zusammenwirkt, die von einem gegen die Wirkung einer Rückholfeder (19) verstallbaren Hebel (15) getragen wird, und ein einfach wirkendes pneumatisches Stellglied (9), bei welchem das freie Ende der Kolbenstange (13) derart angeordnet ist, daß beim Unterdrucksetzen des Zylinders (9) der Hebel (15) gegen die Wirkung der Rückholfeder (19) verschoben wird.

5. Vorrichtung gemäß Anspruch 4, dadurch gekennzeichnet, daß diese mit Abtastvorrichtungen (28) zur Überprüfung der Länge der Rolle (55) mit dem Metallband (59) versehen ist, wobei die genannten Fühler (28) in einen Meldekreis eingeschaltet sind.

6. Vorrichtung gemäß Anspruch 4, dadurch gekennzeichnet, daß sie Einrichtungen (28, 38) umfaßt zur Änderung des Wertes der Winkelverschiebung der Antriebsachse (24) in Abhängigkeit von der Dicke des nach Ausführung der Schweißpunkte verbleibenden, auf die Aufwickelrolle (56) gewickelten Stückes Metallband.

7. Vorrichtung gemäß Anspruch 4, 5 und 6, dadurch gekennzeichnet, daß die Fühler (28) mit einem mit der Metallbandrolle (59) zusammenwirkenden Finger versehen sind, wobei der genannte Finger von einer diametral zur Achse der genannten Rolle (55) verschiebbaren Einheit getragen wird und mit elastischen Vorrichtungen (46) verbunden ist, durch welche der Finger (28) gegen die genannte Rolle (55) gehalten wird, wobei die genannte Einheit einen beweglichen Anschlag (38a) besitzt zur Begrenzung des Rückstellweges des Hebels (15) in Abhängigkeit von der Dicke der Rolle (55) mit dem Metallband (59).

8. Vorrichtung gemäß Anspruch 4, dadurch gekennzeichnet, daß die Rolle (55) mit dem Metallband (59) und die Aufwickelrolle (56) für das nach Ausführung der Schweißpunkte verbleibende Stück Metallband in einem Kästchen (54) untergebracht sind, wobei das Gehäuse (7) mit elastischen Vorrichtungen (53) zur Fixierung des Kästchens (54) versehen ist.

9. Vorrichtung gemäß Anspruch 4, dadurch gekennzeichnet, daß sie händisch betätigbare Vorrichtungen (67) zur Steuerung der Umdrehung des Sperrades (18) umfaßt.

10. Vorrichtung gemäß Anspruch 4, dadurch gekennzeichnet, daß die Vorrichtungen zur Führung des Metallbandes aus C-Profilen (72, 73) aus Isoliermaterial bestehen, die mittels elastischer Klammern am Gehäuse befestigt sind.

# FIG.1

0 076 185

FIG.1A

FIG.5

FIG.6

FIG.2

FIG.7

FIG.4

FIG.3

0 076 185

FIG.8

0 076 185